# EUROPEAN PATENT SPECIFICATION

(11) **EP 3 208 142 B1**
(45) Date of publication and mention of the grant of the patent: **28.11.2018**
(21) Application number: 15850229.4
(22) Date of filing: 25.08.2015
(51) Int. Cl.: B60N 2/28

(54) **CHILD SEAT SUPPORT DEVICE**
STÜTZVORRICHTUNG FÜR KINDERSITZ
DISPOSITIF DE SUPPORT DE SIÈGE D'ENFANT

(30) Priority: 14.10.2014 JP 2014209909
(43) Date of publication of application: 23.08.2017
(73) Proprietor: Car Mate Mfg. Co., Ltd., Toshima-ku Tokyo 171-0051 (JP)
(72) Inventor: HASUMI Syunichi, Tokyo 171-0051 (JP)
(74) Representative: Beetz & Partner mbB
(86) International application number: PCT/JP2015/073840
(87) International publication number: WO 2016/059880

(56) References cited:
- EP-A1- 2 679 440
- CN-U- 203 666 434
- DE-U1-202013 103 189
- JP-A- 2012 076 717
- JP-B2- 4 898 037
- US-A1- 2014 203 605

## Description

### TECHNICAL FIELD

The present invention relates to a child seat support device that prevents a child seat placed on a vehicle seat from falling forward in case of a sudden braking, a collision, or a similar accident.

### BACKGROUND ART

A child seat placed on a vehicle seat is used by fixing a seat body with a vehicle seat belt. Due to an influence of an inertia force generated during braking, the child seat fixed to the vehicle seat moves so as to fall forward with a site near a rear end of a seat base as a base point. In view of this, the child seat includes a support device to reduce a sinking of a front side of the seat base.

For example, a child seat support device disclosed in Document CN 203666434U or in Patent Document 1 have been known. The child seat support device disclosed in Patent Document 1 is basically constituted of a horizontal member and a vertical member. The horizontal member projects to a front side of a seat base. The vertical member can incline and fall down to the seat base side with this horizontal member as a base point. The child seat support device with such basic configuration adjusts an angle and a length of the vertical member and causes a distal end of the vertical member to abut on a vehicle floor to ensure providing an effect of preventing a child seat from falling down.

The vertical member is constituted of an outer tube and an inner tube. The length of the vertical member is adjustable by the inner tube coming in and out an inside of the outer tube. The inner tube has a plurality of positioning holes. Inserting a positioning pin disposed at the outer tube to any one of the positioning holes ensures determining the length of the vertical member.

Patent Document 1: Japanese Patent No. 4898037

### DISCLOSURE OF THE INVENTION

### PROBLEMS TO BE SOLVED BY THE INVENTION

The use of the child seat support device disclosed in Patent Document 1 allows preventing the child seat from inclining and falling down in case of a sudden braking or a similar accident.

However, a conventional child seat support device such as the child seat support device disclosed in Patent Document 1 is required to manually adjust the length of the vertical member by a person in charge of mounting when the child seat is mounted to the vehicle seat. In view of this, if the person in charge of mounting does not appropriately adjust the child seat support device when the child seat is mounted to the vehicle seat, the child seat support device cannot provide the function, thereby involving a hazard.

An object of the present invention is to provide a child seat support device that eliminates the need for adjustment by a person in charge of mounting to ensure an improvement in safety.

### SOLUTIONS TO THE PROBLEMS

A child seat support device according to the present invention to achieve the object is a seat support device for a child seat placed on a seat cushion of a vehicle seat and fixed to the vehicle seat. The child seat support device includes a fixed portion and a movable portion. The fixed portion is fixed to the child seat. The movable portion is supported via the fixed portion. The movable portion extends to a vehicle floor. The movable portion includes an automatic adjustment mechanism and a lock mechanism. The automatic adjustment mechanism changes a length of the movable portion from the fixed portion according to a height of the vehicle floor to bring a lower end portion of the movable portion into abutment with the vehicle floor. The lock mechanism stops an operation of the automatic adjustment mechanism in association with a change in acceleration of a vehicle.

The child seat support device having the above-described features can be configured as follows. The automatic adjustment mechanism is constituted of biasing means that presses the movable portion to the vehicle floor side. The feature allows the distal end of the movable portion to be brought into abutment with the vehicle floor reliably compared with the case of abutment only by own weight of the movable portion. That is, this improves ground following capability of the automatic adjustment mechanism to the height of the vehicle floor.

The child seat support device having the above-described features may be configured as follows. The lock mechanism operates by inclining the movable portion pressed to the vehicle floor side. With this feature, configuring the movable portion so as to be inclined in association with the change in acceleration caused by the sudden braking and the collision eliminates the need for providing a switch to operate the lock mechanism, ensuring the simple configuration.

The child seat support device having the above-described features can be configured as follows. The movable portion has a hole on a side surface. The lock mechanism operates by inserting a stopper fixed via the fixed portion into the hole. This feature reliably works the lock mechanism.

The child seat support device having the above-described features can be configured as follows. The movable portion has a wave-shaped surface on a side surface. The lock mechanism operates by fitting a stopper fixed via the fixed portion to the wave-shaped surface. This mechanism ensures narrowing a fitting interval compared with the case of the insertion of the stopper to the hole. Accordingly, a time until the lock mechanism acts can be shortened.

The child seat support device having the above-described features can be configured as follows. The movable portion has a convex-shaped teeth portion on a side surface. The lock mechanism operates by inserting the teeth portion into a stopper fixed via the fixed portion. This feature also ensures reliably working the lock mechanism between the teeth portion and the stopper.

The child seat support device having the above-described features can be configured as follows. The movable portion has a friction surface on a side surface. The lock mechanism operates by bringing a stopper fixed via the fixed portion into abutment with the friction surface. This feature works the lock mechanism when the friction surface abuts on the stopper. Accordingly, a time lag from when the sudden braking or the collusion occurs until the lock mechanism works can be significantly shortened.

The child seat support device having the above-described features can be configured as follows. The fixed portion internally houses a part of the movable portion. This configuration ensures the slim support device and a weight reduction of the support device while achieving fixing the safety.

Furthermore, the child seat support device having the above-described features may be configured as follows. The fixed portion has a through-hole on a side surface. The lock mechanism operates by inserting a stopper disposed at the movable portion into the through-hole. This feature can also reliably act the lock mechanism.

### EFFECTS OF THE INVENTION

The child seat support device with the above-described features eliminates the need for adjustment of the length of the support device by the person in charge of mounting who installs the child seat to the vehicle seat to ensure an improvement in safety.

### BRIEF DESCRIPTION OF THE DRAWINGS

Fig. 1 is a partially cross-sectional perspective view illustrating a configuration of a child seat support device according to a first embodiment.
Fig. 2 is an exploded perspective view illustrating the configuration of the child seat support device according to the first embodiment.
Fig. 3 is a perspective view illustrating a state where the child seat support device according to embodiments is attached to a child seat.
Fig. 4 is a partially enlarged cross-sectional view illustrating a state where an automatic adjustment mechanism works in the child seat support device according to the first embodiment.
Fig. 5 is a partially enlarged cross-sectional view illustrating a state where a lock mechanism works in the child seat support device according to the first embodiment.
Fig. 6 is a drawing to describe a case where the child seat installed to a vehicle seat and the support device attached to the child seat are in a steady state.
Fig. 7 is a drawing to describe a case where the child seat installed to the vehicle seat and the support device attached to the child seat are in an abnormal state.
Fig. 8 is a partially enlarged cross-sectional view illustrating a state where the automatic adjustment mechanism works in a child seat support device according to a second embodiment.
Fig. 9 is a partially enlarged cross-sectional view illustrating a state where the lock mechanism works in the child seat support device according to the second embodiment.
Fig. 10 is a partially enlarged cross-sectional view illustrating a state where the automatic adjustment mechanism works in a child seat support device according to a third embodiment.
Fig. 11 is a partially enlarged cross-sectional view illustrating a state where the lock mechanism works in the child seat support device according to the third embodiment.
Fig. 12 is a partially enlarged cross-sectional view illustrating a state where the automatic adjustment mechanism works in a child seat support device according to a fourth embodiment.
Fig. 13 is a partially enlarged cross-sectional view illustrating a state where the lock mechanism works in the child seat support device according to the fourth embodiment.
Fig. 14 is a partially enlarged cross-sectional view illustrating a state where the automatic adjustment mechanism works in a child seat support device according to a fifth embodiment.
Fig. 15 is a partially enlarged cross-sectional view illustrating a state where the lock mechanism works in a child seat support device according to a sixth embodiment.
Fig. 16 is a cross-sectional view illustrating a first application example of the child seat support device according to the embodiments and is a drawing illustrating a state where the automatic adjustment mechanism works.
Fig. 17 is a cross-sectional view illustrating the first application example of the child seat support device according to the embodiments and is a drawing illustrating a state where the lock mechanism works.
Fig. 18 is a partially enlarged cross-sectional view illustrating a second application example of the child seat support device according to the embodiments and is a drawing illustrating a state where the automatic adjustment mechanism works.
Fig. 19 is a partially enlarged cross-sectional view illustrating the second application example of the child seat support device according to the embodiments and is a drawing illustrating a state where the lock mechanism works.

### DESCRIPTION OF PREFERRED EMBODIMENTS

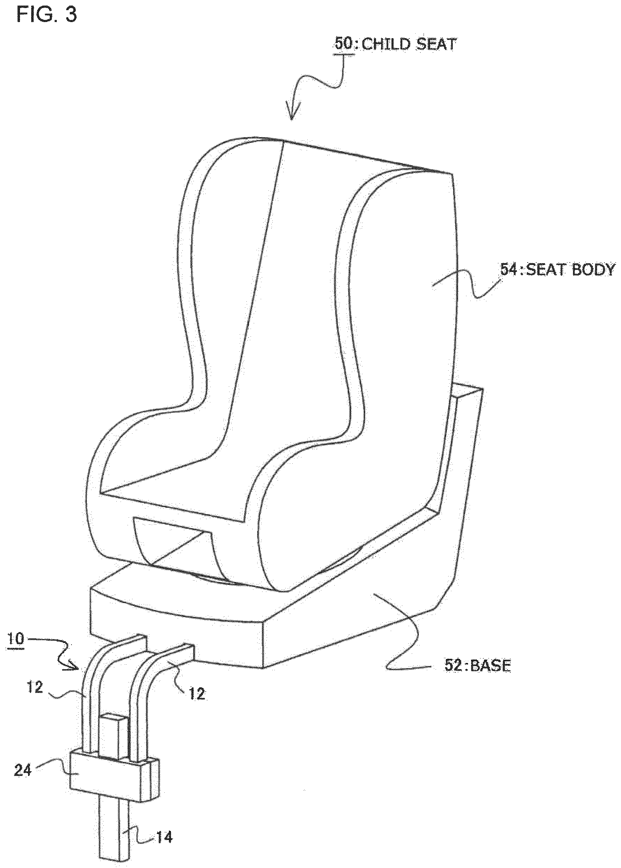

The following describes embodiments according to a child seat support device of the present invention in detail with reference to the drawings. As illustrated in Fig. 3, a child seat 50 that applies the child seat support device according to the present invention (hereinafter simply referred to as a support device 10) includes a base 52 and a seat body 54. The support device 10 according to the embodiments includes fixed portions 12 and a movable portion 14.

The fixed portions 12 are members fixed to the base 52 of the child seat 50. In this embodiment, the fixed portion 12 has an approximately L-shaped structure. After the fixed portion 12 extends from the base 52 to a front side of the child seat 50 (horizontal direction), the fixed portion 12 extends to a vehicle floor side (lower side). In the example illustrated in Fig. 3, the fixed portions 12 are disposed as a pair of two. The fixed portions 12 include a support case 24 to support the movable portion 14 at the distal end side.

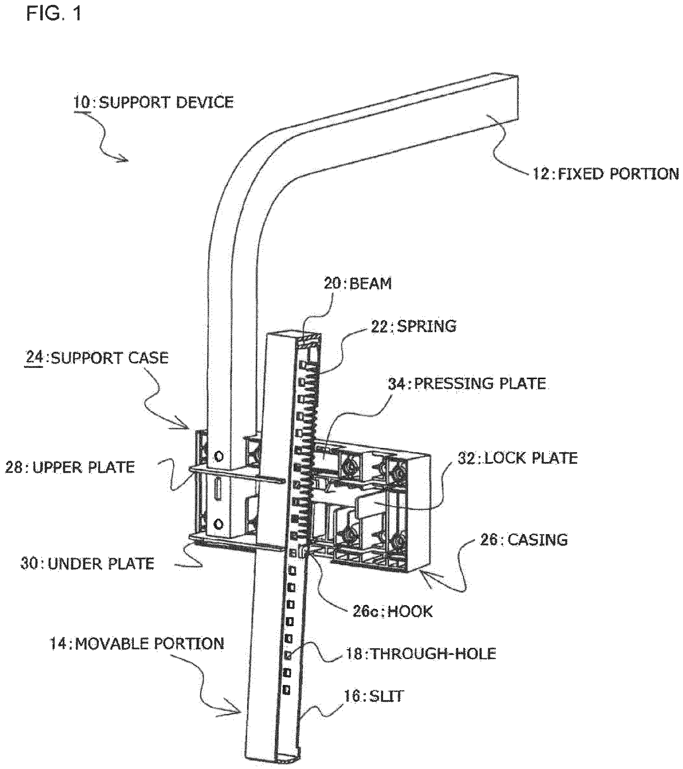

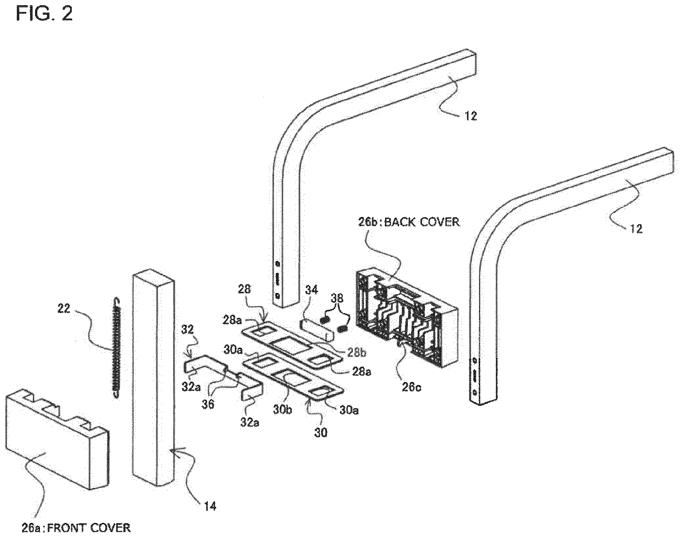

The movable portion 14 is a support leg that allows sliding of the support case 24 in a vehicle floor direction. In the examples illustrated in Fig. 1 to Fig. 3, the movable portion 14 is configured to have a prismatic outline. A slit 16 formed along a longitudinal direction of the movable portion 14 and a plurality of through-holes 18 are disposed on a mounting back surface side. The through-holes 18 are disposed at both sides (only one side in Fig. 1 because Fig. 1 illustrates a partial cross section) on the slit 16. A beam 20 is disposed on an inner upper end side of the movable portion 14.

The slit 16 is an element to vertically move the movable portion 14 while causing a hook 26c provided at the support case 24, which will be described in detail later, to interpose to an inside of the movable portion 14. The plurality of through-holes 18 are elements into which a stopper 36 interposes at an operation of a lock mechanism. The beam 20 is an element to dispose a spring 22 as biasing means, which has a repulsion force to a tensile side, between itself and the hook 26c interposed in the slit 16.

The support case 24 includes a casing 26, an upper plate 28, an under plate 30, a lock plate 32, and a pressing plate 34. The casing 26 is an outline formed of a front cover 26a and a back cover 26b. The casing 26 internally houses the components as described above, a part of the fixed portion, and a part of the movable portion. The back cover 26b includes the hook 26c to lock the spring 22.

The upper plate 28 and the under plate 30 are support plates constituted of a pair of two. In this embodiment, both the upper plate 28 and the under plate 30 include two fixed portion insertion holes 28a and 30a and one movable portion insertion holes 28b and 30b. Differentiating sizes of the fixed portion insertion holes 28a and 30a at the upper plate 28 and the under plate 30 is unnecessary. Meanwhile, regarding the movable portion insertion holes 28b and 30b, an opening width positioned in a thickness direction of the casing 26 of the movable portion insertion hole 28b disposed at the upper plate 28 is formed larger than that of the movable portion insertion hole 30b disposed at the under plate 30. This is because of the following. The movable portion 14 inserted into the movable portion insertion holes 28b and 30b can be inclined in the thickness direction of the casing 26 with the under plate 30 side as a fulcrum.

It is preferable that the upper plate 28 and the under plate 30 are formed of a member with high rigidity such as a metal material. This configuration allows reducing a breakage when stress is applied in case of a sudden braking, a collision, or a similar accident.

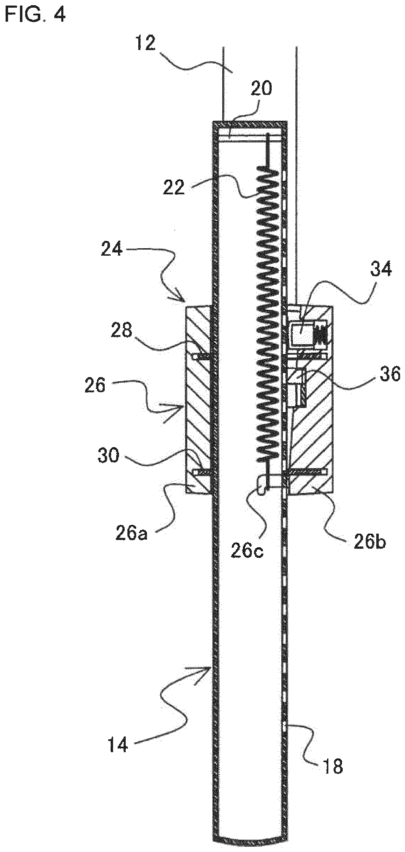

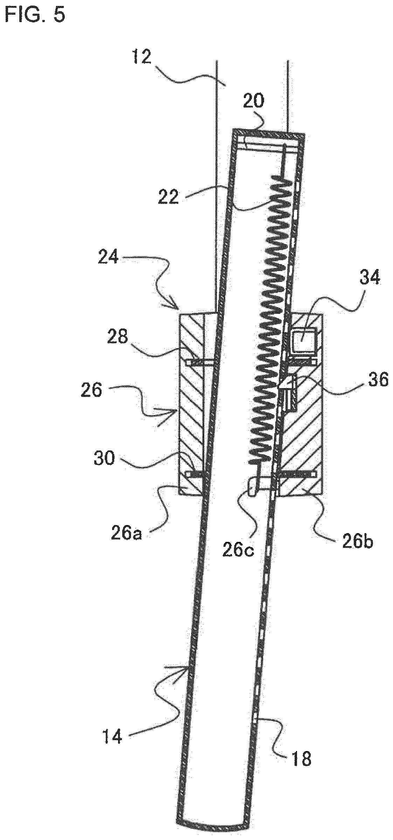

The lock plate 32 is a plate that includes the stopper 36 to operate the lock mechanism. The lock plate 32 includes positioning pieces 32a, in addition to the claw-formed stopper 36. As described above, the stopper 36 is inserted into the through-holes 18, which are disposed on the mounting back surface of the movable portion 14, to be in charge of an action to stop the sliding of the movable portion 14. The positioning pieces 32a are elements to prevent a displacement and an inclination of the stopper 36. As illustrated in Fig. 4 and Fig. 5, with the movable portion 14 in the vertical state (along the front cover 26a), the stopper 36 of the lock plate 32 is not inserted into the through-holes 18. The lock plate 32 is positioned such that the stopper 36 is inserted into the through-holes 18 when the movable portion 14 inclines.

The pressing plate 34 is a biasing member to prevent the movable portion 14 from inclining to the back cover 26b side in a steady state during which a change in acceleration in association with the sudden braking and the collision does not occur. In the case of this embodiment, the pressing plate 34 is disposed on the back cover 26b side of the casing 26. Springs 38 having a repulsion force to a compression side are disposed between the back cover 26b and the pressing plate 34. This configuration presses the pressing plate 34 to the front cover 26a side, thereby ensuring reducing the pressing plate 34 falling down to the back cover 26b side in the steady state.

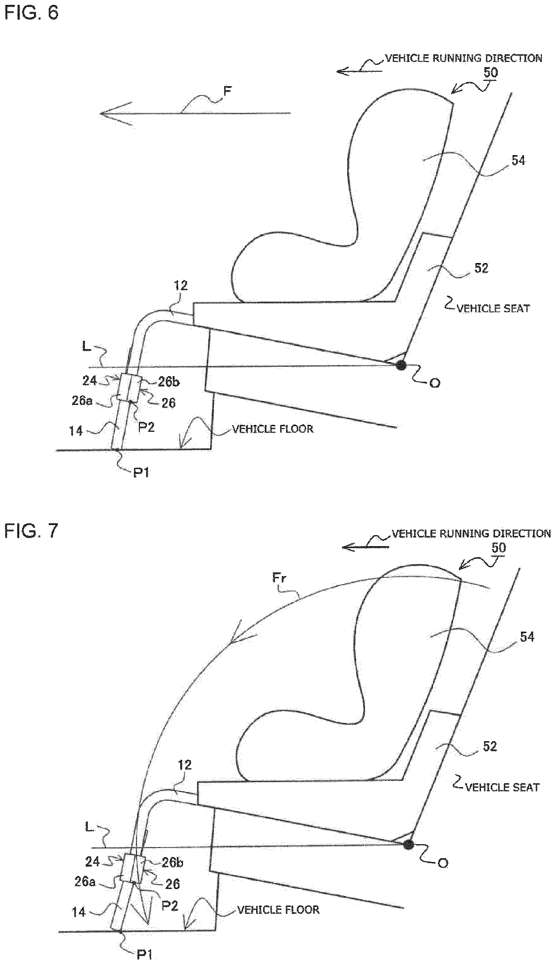

As illustrated in Fig. 6, the support case 24 including such basic elements is preferably installed on a lower side with respect to a horizontal line L with a fixed point O with respect to the vehicle seat as the base point because of the following. As illustrated in Fig. 7, on the lower side with respect to the horizontal line L, a rotation force Fr caused by an inertia force F in association with the change in acceleration (the rotation force with the fixed point O as the base point) attempts to enter into a side opposite to a running direction. Accordingly, disposing the support case 24 on the lower side with respect to the horizontal line L eases obtaining the inclination of the movable portion 14 caused by the rotation force Fr.

As illustrated in Fig. 6 and Fig. 7, because of a property of the installation state of the child seat 50 to a seat cushion on the vehicle seat, in the case where the child seat 50 is properly mounted to the vehicle seat, a predetermined inclined angle is provided to the fixed portion 12. In view of this, even if the support case 24 is disposed on an upper side with respect to the horizontal line L, the inclination of the movable portion 14 in association with the rotation force Fr can be obtained. Even with the inclination of the seat cushion of the vehicle seat absent (the flat seat cushion), the presence of the fixed portions 12 always locates the support case 24 on the lower side with respect to the fixed point O.

In the steady state where the change in acceleration in association with the sudden braking and the collision does not occur, the support device 10 with such basic configuration maintains the state of the movable portion 14 going along the front cover 26a of the casing 26. The action of the spring 22 applies the pressing force to the vehicle floor side to the movable portion 14. In view of this, the movable portion 14 in the steady state slides with the support case 24 as the base point. Thus, the movable portion 14 works the automatic adjustment mechanism that automatically adjusts the length of the movable portion 14 so as to contact the vehicle floor.

Next, in case of an abnormal state such as the sudden braking and the collision of the vehicle, the strong inertia force F acts on the child seat 50. In this respect, the child seat 50 on which a child (not illustrated) is seated is fixed to the vehicle seat with an ISO-FIX connector or a vehicle seat belt (neither of which are illustrated). This applies a force of pulling the child seat 50 forward and a force of sinking the child seat 50 into the lower side with the fixed point O with respect to the vehicle seat as the center. In view of this, the rotation force Fr that causes the child seat 50 to sink into the front side with the fixed point O with respect to the vehicle seat as the base point is applied.

Here, the support case 24 in the support device 10 is positioned on a vehicle running direction side with respect to the rotational center (fixed point O). Accordingly, the application of the rotation force Fr to the child seat 50 moves the support case 24 so as to sink into the vehicle floor side. At this time, with an installation point PI to the vehicle floor as a fulcrum, and the movable portion insertion hole 30b of the under plate 30 (the lower end side of the support case 24) as a point of effort P2, a force in a rotation direction (inertia force Fr) to the vehicle floor side is applied to the movable portion 14 around the fixed point O of the child seat 50. In view of this, a site of the movable portion 14 positioned upward (the fixed portion 12 side) with respect to the movable portion insertion hole 30b is inclined by being pressed to the back cover 26b side of the casing 26 with a force stronger than the pressing force by the pressing plate 34.

In the case where the support case 24 attempts to sink into the vehicle floor side while the movable portion 14 is pressed to the back cover 26b side (inclined state), the stopper 36, which is opposed to the mounting back surface of the movable portion 14, is inserted into the adjacent through-holes 18. Inserting the stopper 36 into the through-holes 18 with the movable portion 14 pressed to the back cover 26b side works the lock mechanism to stop the sinking of the support case 24 along the movable portion 14. This also stops the rotation (sinking) of the entire child seat 50.

Releasing the inertia force Fr with respect to the child seat 50 eliminates the sinking in association with the rotation of the child seat 50; therefore, the pressing of the movable portion 14 to the back cover 26b side is released. This restores the automatic adjustment function of the length of the movable portion 14.

Thus, with the support device 10 according to the embodiments, the movable portion 14 is slidable in the steady state, thereby allowing the automatic adjustment of the length so as to reach the vehicle floor. Meanwhile, the application of the inertia force F to the child seat 50 due to the sudden braking, the collusion, or a similar accident locks the movable portion 14, thus restraining the sinking of the child seat 50. Accordingly, the support device 10 according to the embodiments eliminates the need for the adjustment of the length of the support device (support leg) by a person in charge of mounting of the child seat 50. This ensures preventing an accident caused by an inappropriate installation state.

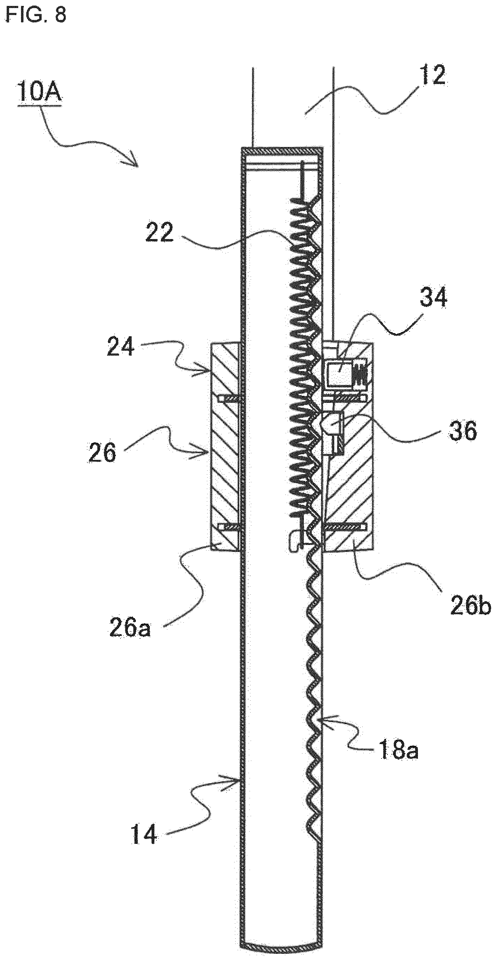

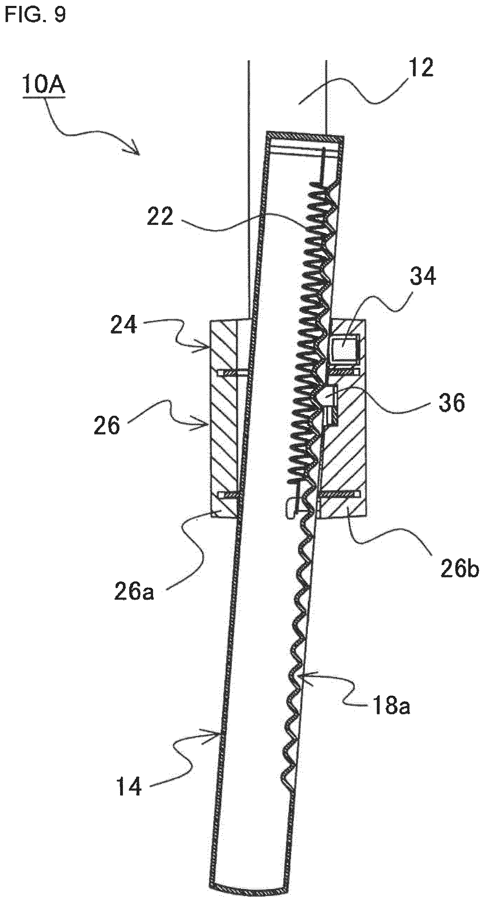

The following describes a child seat support device according to a second embodiment of the present invention with reference to Fig. 8 and Fig. 9. A configuration of a support device 10A according to the embodiment is almost similar to the support device 10 according to the above-described first embodiment. The difference is that, the through-holes 18 disposed on the mounting back surface of the movable portion 14 are replaced by a wave-shaped surface 18a.

The application of the wave-shaped surface 18a allows forming continuous concavities and convexities at intervals narrower than the through-holes 18. This ensures reducing the sinking of the child seat 50 caused by the sudden braking, the collision, or a similar accident to be smaller. Accordingly, the safety can be improved. The stopper 36 according to the embodiment has a distal end shape fittable to the concave portions of the wave-shaped surface 18a. The other configurations, actions, and effects are similar to those of the support device 10 according to the above-described first embodiment.

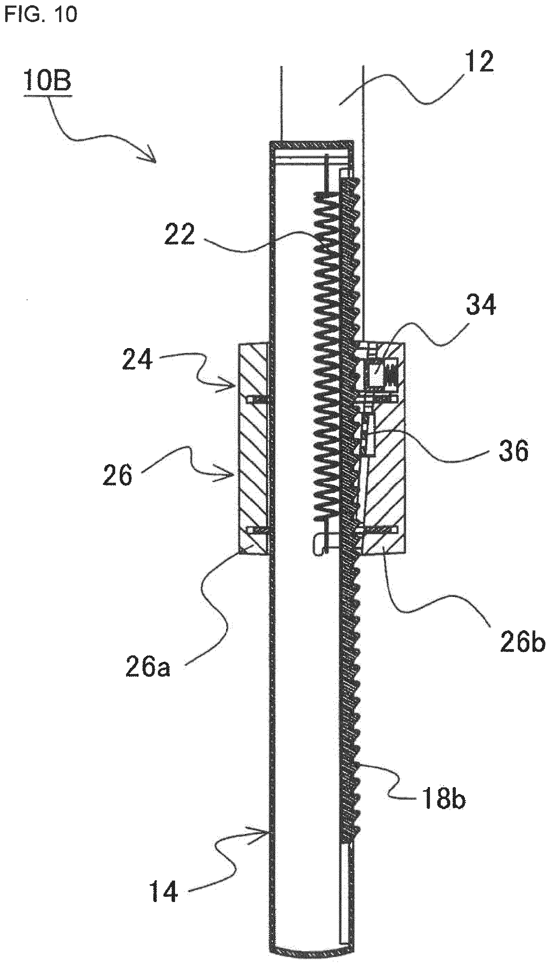

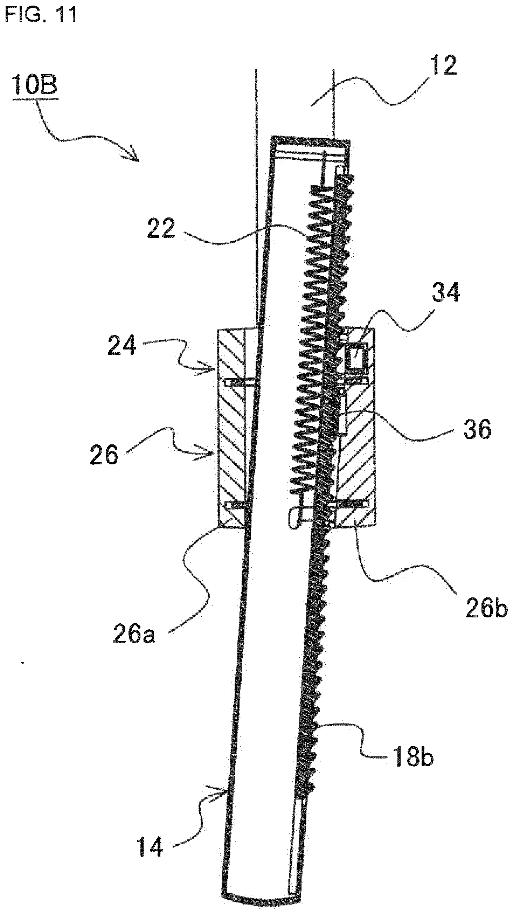

The following describes a child seat support device according to a third embodiment of the present invention with reference to Fig. 10 and Fig. 11. A configuration of a support device 10B according to the embodiment is almost similar to the support devices 10 and 10A according to the above-described first and second embodiments. The difference is that, while the support devices 10 and 10A according to the first and the second embodiments include the through-holes 18 or the wave-shaped surface 18a, which include the holes and the concave portions, on the mounting back surface of the movable portion 14, the support device 10B according to the embodiment includes convex-shaped teeth portions 18b at the equivalent site.

This embodiment configures the plurality of sawtooth-shaped teeth portions 18b continuous in the longitudinal direction of the movable portion 14. The stopper 36 has a form of having through-holes and concave portions to which the teeth portions 18b are fittable. Similar to the first and the second embodiments, this configuration also allows obtaining the automatic adjustment effect of the movable portion 14 in the steady state and the lock effect of the movable portion 14 in the abnormal state. The other configurations, actions, and effects are similar to those of the support devices 10 and 10A according to the above-described first and second embodiments.

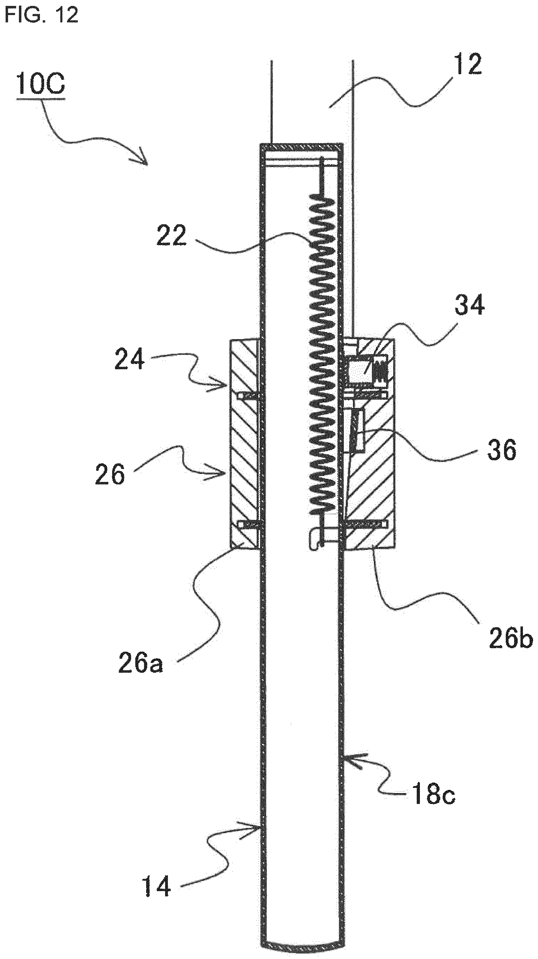

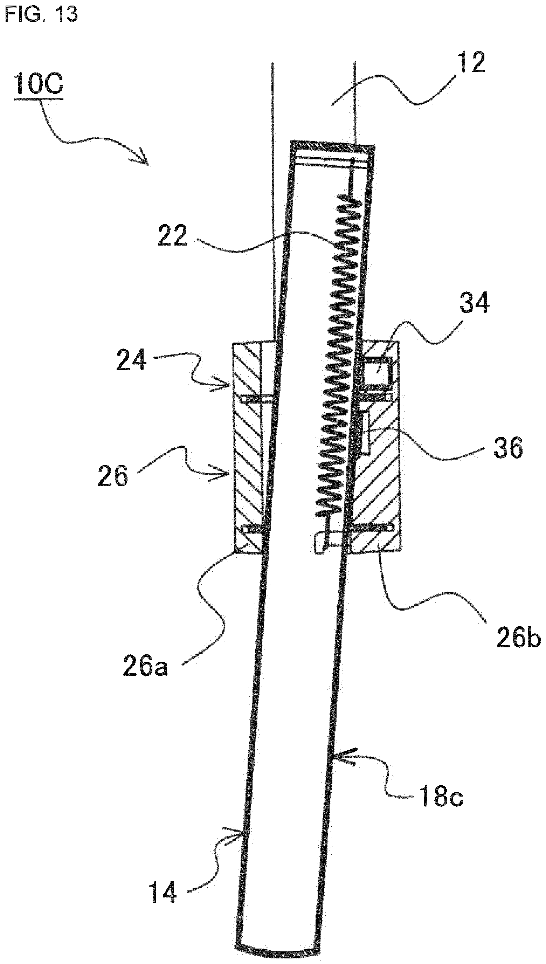

The following describes a child seat support device according to a fourth embodiment of the present invention with reference to Fig. 12 and Fig. 13. A configuration of a support device 10C according to the embodiment is almost similar to the support devices 10, 10A, and 10B according to the above-described first to third embodiments. The difference is in a structure of the mounting back surface of the movable portion 14. This embodiment includes a friction surface 18c on the mounting back surface. The stopper 36 is also constructed to have a friction surface abutting on this friction surface 18c.

Constructing the friction surfaces to be brought into abutment eliminates the need for processing and installing the through-holes 18, the wave-shaped surface 18a, the teeth portions 18b, and a similar member on the mounting back surface. The lock mechanism works when the friction surface of the stopper 36 contacts the friction surface 18c of the mounting back surface. This shortens an operation time until the lock mechanism works in case of the sudden braking and the collusion, thereby ensuring improving the safety. The other configurations, actions, and effects are similar to those of the support devices 10, 10A, and 10B according to the above-described first to third embodiments.

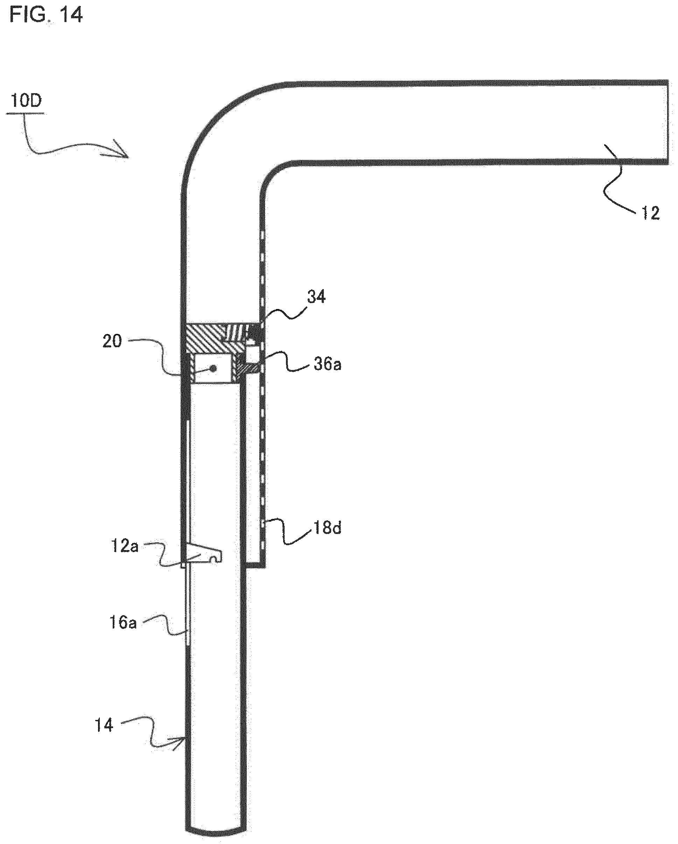

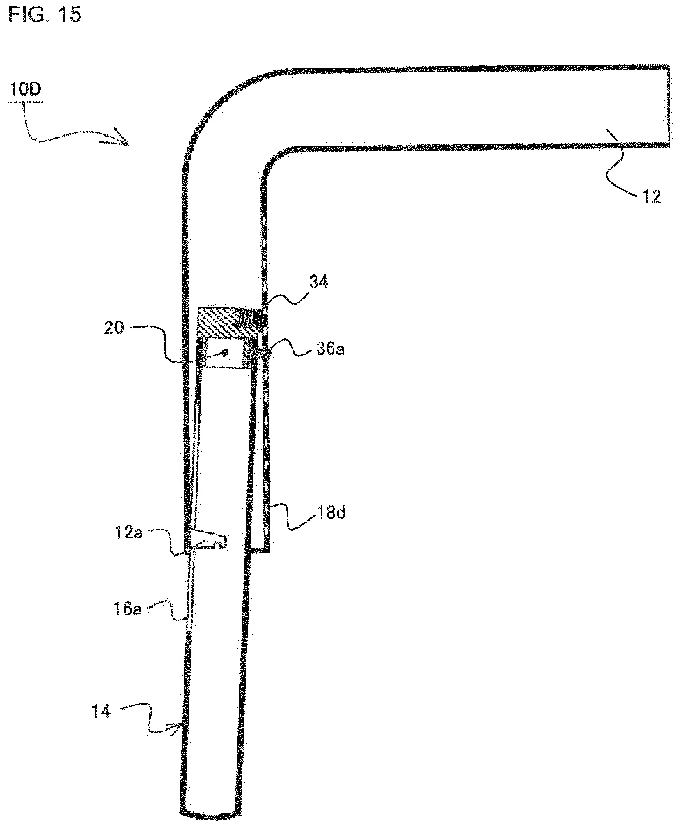

The following describes a child seat support device according to a fifth embodiment of the present invention with reference to Fig. 14 and Fig. 15. While a basic configuration of a support device 10D according to the embodiment where the support device 10D includes the fixed portions 12 and the movable portion 14 is similar to the support devices 10, 10A, 10B, and 10C according to the above-described first to fourth embodiments, the support device 10D differs from the support devices 10, 10A, 10B, and 10C in the following configuration. That is, the support devices 10 to 10C according to the first to the fourth embodiments include the fixed portions 12 as a pair of two to support the one movable portion 14 via the support case 24. Meanwhile, the support device 10D according to the embodiment supports the one movable portion 14 with the one fixed portion 12.

Accordingly, the support device 10D according to the embodiment does not include the support case 24. Meanwhile, both the fixed portion 12 and the movable portion 14 have the basic forms similar to those of the support devices 10 to 10C according to the above-described first to fourth embodiments. That is, the fixed portion 12 has a part extended to the vehicle running direction and a part extended to the vehicle floor side. The movable portion 14 has a straight structure.

This embodiment employs a configuration of housing the movable portion 14 in the fixed portion 12. Therefore, a cross-sectional area of the fixed portion 12 is configured to be larger than a cross-sectional area of the movable portion 14. As illustrated in Fig. 15, it is only necessary that a difference between the fixed portion 12 and the movable portion 14 in a cross-sectional width is provided such that at least the movable portion 14 housed in the fixed portion 12 can be inclined with a lower end of the fixed portion 12 as a base point.

Since this embodiment eliminates the support case 24, a positional relationship between the stopper 36 and the through-holes 18 (including the wave-shaped surface 18a, the teeth portions 18b, and the friction surface 18c) is reversed. That is, in this embodiment, the movable portion 14 includes a stopper 36a and the fixed portion 12 includes through-holes 18d. Since the through-holes 18d are disposed in a direction that the distal end of the movable portion 14 falls down, the through-holes 18d are positioned on a back surface in a state of mounting the fixed portion 12.

In contrast to this, the stopper 36a is disposed on the distal end side of the movable portion 14. The pressing plate 34 is also disposed on the distal end side of the movable portion 14. As illustrated in Fig. 14 and Fig. 15, a hook 12a is disposed on a lower end side of the fixed portion 12, and the beam 20 is disposed on a distal end side of the movable portion 14. A spring (not illustrated) as a biasing member is disposed between this hook 12a and the beam 20. This allows the movable portion 14 to be biased in the vehicle floor direction. The movable portion 14 includes a slit 16a on the mounting back surface side to cause the movable portion 14 to be slidable with the hook 12a inserted.

Similar to the first to the fourth embodiments, this configuration also eliminates the need for the adjustment of the length of the support device (support leg) by the person in charge of mounting of the child seat. Accordingly, the safety can be improved.

The all embodiments describe that, if the inertia force F works on the child seat 50 due to the sudden braking and the collusion, the inclination of the movable portion 14 of the support devices 10 to 10D operates the lock mechanism. However, the lock mechanism may have the following configurations.

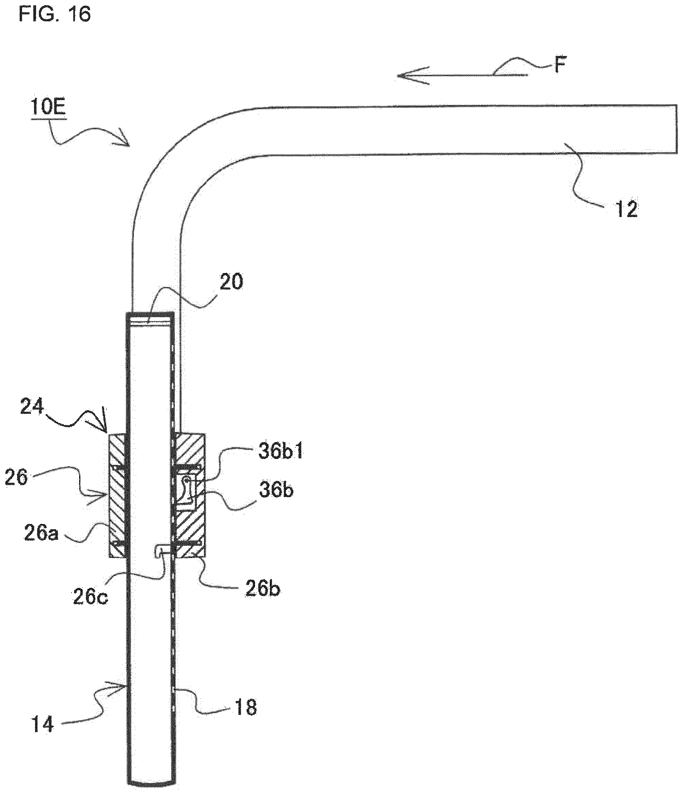

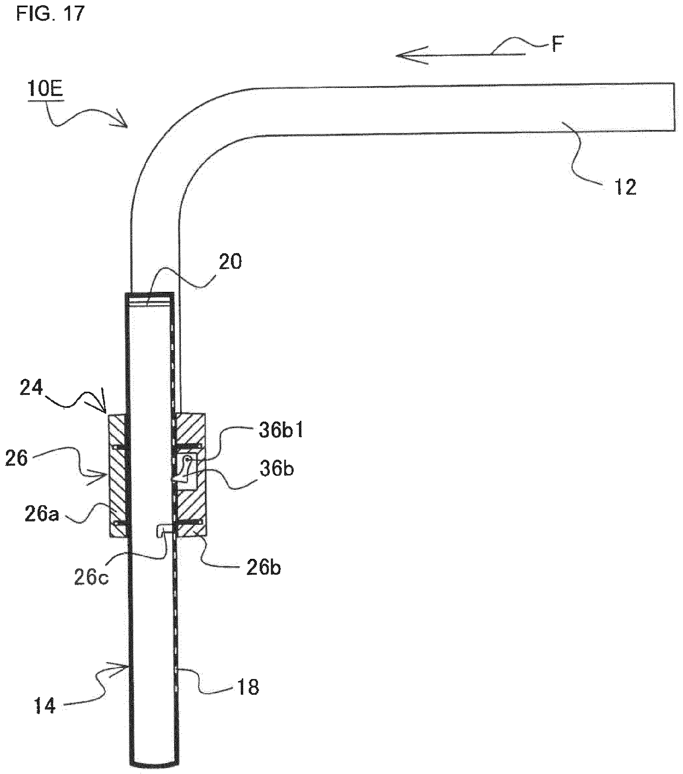

Examples illustrated in Fig. 16 and Fig. 17 are support devices 10E of a type including the support case 24. The support device 10E employs not a claw but a pendulum 36b as the stopper. The movable portion 14 is supported so as not to be inclined with respect to the support case 24.

The support device 10E with the configuration biases the movable portion 14 to the vehicle floor side in the steady state similar to the above-described embodiments, and the length of the movable portion 14 is automatically adjusted. Meanwhile, in case of the sudden braking, the collision, or a similar accident, the inertia force turns the pendulum 36b as the stopper in the running direction with the rotational center as the base point. The insertion of a distal end of the turning pendulum 36b into the through-hole 18, which is disposed on the mounting back surface of the movable portion 14, works the lock mechanism.

Similar to the support devices 10 to 10D according to the embodiments, the support device 10E with this configuration also eliminates the need for the adjustment of the length of the support device (support leg) by the person in charge of mounting of the child seat. Accordingly, the safety can be improved.

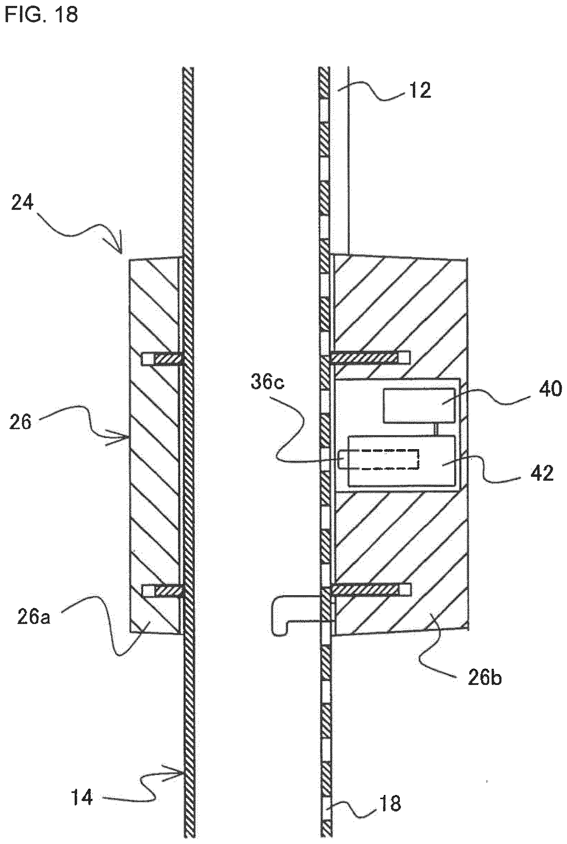

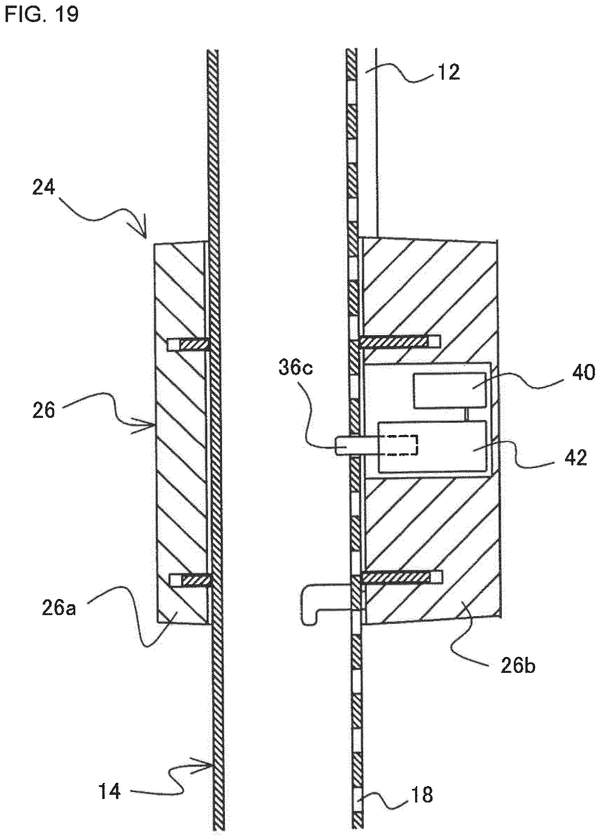

Furthermore, a configuration where an element to constitute the stopper is inserted into the through-hole 18 formed on the mounting back surface of the movable portion 14 may employ not a passive operation but an active operation. The passive operation is operated by the use of the inertia force F like the examples illustrated in Fig. 16 and Fig. 17. The active operation includes driving means 42 as illustrated in Fig. 18 and Fig. 19.

That is, the support case 24 internally includes a sensor 40, the driving means 42, and a lock pin 36c as the stopper. Here, it is only necessary that the sensor 40 is, for example, an acceleration sensor. When the acceleration detected by the acceleration sensor changes suddenly, the acceleration sensor outputs a drive signal to the driving means 42.

The driving means 42 may be an air pressure system such as an inflator or may be an electromagnetic system. It is only necessary that the driving means 42 can operate by a reception of the drive signal to project the lock pin 36c mounted to the inside of the driving means 42.

In the case where the sensor 40 detects the sudden change in the acceleration, this configuration outputs the drive signal to the driving means 42. The driving means 42 that receives the drive signal operates to project the lock pin 36c. The lock pin 36c projected from the driving means 42 is inserted into the through-hole 18, which is formed on the mounting back surface of the movable portion 14, to work the lock function.

The all embodiments describe that the action of the spring 22 as the biasing means generates the function as the automatic adjustment mechanism. However, the function as the automatic adjustment mechanism may be generated by own weight of the movable portion 14.

### DESCRIPTION OF REFERENCE SIGNS

- 10, 10A, 10B, 10C, 10D, 10E: support device
- 12: fixed portion
- 12a: hook
- 14: movable portion
- 16: slit
- 16a: slit
- 18: through-hole
- 18a: wave-shaped surface
- 18b: teeth portion
- 18c: friction surface
- 18d: through-hole
- 20: beam
- 22: spring
- 24: support case
- 26: casing
- 26a: front cover
- 26b: back cover
- 26c: hook
- 28: upper plate
- 28a: fixed portion insertion hole
- 28b: movable portion insertion hole
- 30: under plate
- 30a: fixed portion insertion hole
- 30b: movable portion insertion hole
- 32: lock plate
- 32a: positioning piece
- 34: pressing plate
- 36: stopper
- 36a: stopper
- 36b: pendulum
- 36c: lock pin
- 38: spring
- 40: sensor
- 42: driving means
- 50: child seat
- 52: base
- 54: seat body

## Claims

1. A child seat support device (10) for a child seat (50) placed on a seat cushion of a vehicle seat, the child seat support device (10) being fixed to the vehicle seat, the child seat support device comprising:
a fixed portion (12) fixed to the child seat (50); and
a movable portion (14) supported via the fixed portion (12), the movable portion (14) extending to a vehicle floor, wherein
the movable portion (14) includes:
an automatic adjustment mechanism that changes a length of the movable portion (14) from the fixed portion (12) according to a height of the vehicle floor to bring a lower end portion of the movable portion (14) into abutment with the vehicle floor; and
a lock mechanism that stops an operation of the automatic adjustment mechanism in association with a change in acceleration of a vehicle.

2. The child seat support device according to claim 1, wherein
the automatic adjustment mechanism is constituted of biasing means that presses the movable portion to the vehicle floor side.

3. The child seat support device according to claim 1 or 2, wherein
the lock mechanism operates by inclining the movable portion pressed to the vehicle floor side.

4. The child seat support device according to any one of claims 1 to 3, wherein:
the movable portion has a hole on a side surface, and
the lock mechanism operates by inserting a stopper fixed via the fixed portion into the hole.

5. The child seat support device according to any one of claims 1 to 3, wherein:
the movable portion has a wave-shaped surface on a side surface, and
the lock mechanism operates by fitting a stopper fixed via the fixed portion to the wave-shaped surface.

6. The child seat support device according to any one of claims 1 to 3, wherein:
the movable portion has a convex-shaped teeth portion on a side surface, and
the lock mechanism operates by inserting the teeth portion into a stopper fixed via the fixed portion.

7. The child seat support device according to any one of claims 1 to 3, wherein:
the movable portion has a friction surface on a side surface, and
the lock mechanism operates by bringing a stopper fixed via the fixed portion into abutment with the friction surface.

8. The child seat support device according to any one of claims 1 to 3, wherein the fixed portion internally houses a part of the movable portion.

9. The child seat support device according to claim 8, wherein:
the fixed portion has a through-hole on a side surface, and
the lock mechanism operates by inserting a stopper disposed at the movable portion into the through-hole.

## Patentansprüche

1. Kindersitz-Trägervorrichtung (10) für einen Kindersitz (50), der auf einem Sitzpolster eines Fahrzeugsitzes platziert wird, wobei die Kindersitz-Trägervorrichtung (10) an den Fahrzeugsitz befestigt ist, die Kindersitz-Trägervorrichtung umfassend:
einen festen Abschnitt (12), der an dem Kindersitz (50) befestigt ist; und
einen bewegbaren Abschnitt (14), der durch den festen Abschnitt (12) getragen wird, wobei der bewegbare Abschnitt (14) sich zu einem Fahrzeugboden erstreckt, wobei der bewegbare Abschnitt (14) beinhaltet:
einen automatischen Einstellmechanismus, der eine Länge des bewegbaren Abschnitts (14) von dem festen Abschnitt (12) gemäß einer Höhe des Fahrzeugbodens ändert, um einen unteren Endabschnitt des bewegbaren Abschnitts (14) zum Auflegen auf dem Fahrzeugboden zu bringen; und
einen Verriegelungsmechanismus, der einen Vorgang des automatischen Einstellmechanismus in Verbindung mit einer Beschleunigungsänderung eines Fahrzeugs stoppt.

2. Kindersitz-Trägervorrichtung nach Anspruch 1, wobei der automatische Einstellmechanismus aus Spannmitteln besteht, die den bewegbaren Abschnitt auf die Fahrzeugbodenseite drücken.

3. Kindersitz-Trägervorrichtung nach Anspruch 1 oder 2, wobei der Verriegelungsmechanismus funktioniert, indem der bewegbare Abschnitt, der auf die Fahrzeugbodenseite gedrückt wird, geneigt wird.

4. Kindersitz-Trägervorrichtung nach einem der Ansprüche 1 bis 3, wobei:
der bewegbare Abschnitt ein Loch auf einer Seitenfläche aufweist, und
der Verriegelungsmechanismus funktioniert, indem ein Sperrelement, das mittels des festen Abschnitts in dem Loch befestigt ist, eingeführt wird.

5. Kindersitz-Trägervorrichtung nach einem der Ansprüche 1 bis 3, wobei:
der bewegbare Abschnitt eine wellenförmige Oberfläche an einer Seitenfläche aufweist, und
der Verriegelungsmechanismus funktioniert, indem ein Sperrelement, das mittels des festen Abschnitts an der wellenförmigen Oberfläche befestigt ist, angepasst wird.

6. Kindersitz-Trägervorrichtung nach einem der Ansprüche 1 bis 3, wobei:
der bewegbare Abschnitt einen konvexförmigen Zahnabschnitt auf einer Seitenfläche aufweist, und
der Verriegelungsmechanismus funktioniert, indem der Zahnabschnitt in ein Sperrelement, das mittels des festen Abschnitts befestigt ist, eingeführt wird.

7. Kindersitz-Trägervorrichtung nach einem der Ansprüche 1 bis 3, wobei:
der bewegbare Abschnitt eine Reibungsoberfläche auf einer Seitenfläche aufweist, und
der Verriegelungsmechanismus funktioniert, indem ein Sperrelement, das mittels des festen Abschnitts befestigt ist, zur Auflage mit der Reibungsoberfläche gebracht wird.

8. Kindersitz-Trägervorrichtung nach einem der Ansprüche 1 bis 3, wobei
der feste Abschnitt innen einen Teil des bewegbaren Abschnitts aufnimmt.

9. Kindersitz-Trägervorrichtung nach Anspruch 8, wobei:
der feste Abschnitt ein Durchgangsloch auf einer Seitenfläche aufweist, und
der Verriegelungsmechanismus funktioniert, indem ein Sperrelement, das an dem bewegbaren Abschnitt angeordnet ist, in das Durchgangsloch eingeführt wird.

## Revendications

1. Dispositif support de siège enfant (10) pour siège enfant (50) placé sur un coussin de siège d'un siège de véhicule, le dispositif support de siège enfant (10) étant fixé au siège de véhicule, le dispositif support de siège enfant comprenant :
une section fixe (12) fixée au siège enfant (50) ; et
une section mobile (14) supportée via la section fixe (12), la section mobile (14) s'étendant jusqu'à un plancher de véhicule, la section mobile (14) comportant :
un mécanisme de réglage automatique qui change une longueur de la section mobile (14) depuis la section fixe (12) en fonction d'une hauteur de plancher pour amener une section terminale inférieure de la section mobile (14) en butée avec le plancher du véhicule ; et
un mécanisme de verrouillage qui stoppe un fonctionnement du mécanisme de réglage automatique en association avec un changement d'accélération d'un véhicule.

2. Dispositif support de siège enfant selon la revendication 1, dans lequel
le mécanisme de réglage automatique est constitué d'un moyen d'inclinaison qui comprime la section mobile sur la face du plancher du véhicule.

3. Dispositif support de siège enfant selon la revendication 1 ou 2, dans lequel
le mécanisme de verrouillage fonctionne en inclinant la section mobile comprimée sur la face du plancher du véhicule.

4. Dispositif support de siège enfant selon l'une quelconque des revendications 1 à 3, dans lequel
la section mobile comporte un trou sur une surface latérale, et
le mécanisme de verrouillage fonctionne en insérant un arrêt fixé via la section fixe dans le trou.

5. Dispositif support de siège enfant selon l'une quelconque des revendications 1 à 3, dans lequel
la section mobile comporte une surface de forme ondulée sur une surface latérale, et
le mécanisme fonctionne en ajustant un arrêt fixé via la section fixe sur la surface de forme ondulée.

6. Dispositif support de siège enfant selon l'une quelconque des revendications 1 à 3, dans lequel
la section mobile comporte une section en dent de forme convexe sur une surface latérale, et
le mécanisme de verrouillage fonctionne en insérant la section en dent dans un arrêt fixé via la section fixe.

7. Dispositif support de siège enfant selon l'une quelconque des revendications 1 à 3, dans lequel
la section mobile comporte une surface de friction sur une surface latérale, et
le mécanisme de verrouillage fonctionne en amenant un arrêt fixé via la section fixe en butée avec la surface de friction.

8. Dispositif support de siège enfant selon l'une quelconque des revendications 1 à 3, dans lequel
la section fixe abrite à l'intérieur une partie de la section mobile.

9. Dispositif support de siège enfant selon la revendication 8, dans lequel
la section fixe comportant un trou traversant sur une surface latérale, et
le mécanisme de verrouillage fonctionne en insérant un arrêt disposé au niveau de la section mobile dans le trou traversant.
